# EUROPÄISCHE PATENTSCHRIFT

(11) **EP 0 720 395 B1**
(45) Veröffentlichungstag und Bekanntmachung des Hinweises auf die Patenterteilung: **25.05.2005**
(21) Anmeldenummer: 95119254.1
(22) Anmeldetag: 06.12.1995
(51) Int. Cl.: H04Q 3/62

(54) **Verfahren zur Herstellung von Fernmeldeverbindungen**
Method for establishing telephone connections
Procédé pour réaliser des connexions téléphoniques

(30) Priorität: 30.12.1994 DE 4447258
(43) Veröffentlichungstag der Anmeldung: 03.07.1996
(73) Patentinhaber: SIEMENS AKTIENGESELLSCHAFT, 80333 München (DE)
(72) Erfinder: Wildgrube, Eberhard, Dipl.Phys., D-84419 Schwindegg (DE); Völzke, Eckhard, Dipl.Ing., D-82031 Grünwald (DE)

(56) Entgegenhaltungen:
- US-A- 5 247 571
- US-A- 5 339 356
- BOWYER R ET AL: "GESTION DE RESEAU INTELLIGENT D'UN SERVICE DE RESEAU VIRTUEL PRIVE AU MOYEN DE POINT DE CONTROLE DU SERVICE" ONDE ELECTRIQUE, Bd. 70, Nr. 1, 1. Januar 1990 (1990-01-01), Seiten 28-31, XP000094682 PARIS ISSN: 0030-2430
- BROSEMER J J ET AL: "VIRTUAL NETWORKS: PAST, PRESENT AND FUTURE" IEEE COMMUNICATIONS MAGAZINE, Bd. 30, Nr. 3, 1. März 1992 (1992-03-01), Seiten 80-85, XP000297353 ISSN: 0163-6804

## Beschreibung

Die Erfindung betrifft ein Verfahren zur Herstellung von Fernmeldeverbindungen nach dem Oberbegriff des Patentanspruchs 1.

Es sind bereits Fernsprechnebenstellenanlagen mit räumlich abgesetzten sogenannten außenliegenden Nebenstellen bekannt. Die außenliegenden Nebenstellen sind über dedizierte physikalische Stromwege galvanisch an die zugehörige Nebenstellenanlage angeschlossen. Eine solche Struktur ist zunächst mit dem Nachteil verbunden, daß Verbindungskabel zwischen Nebenstellenanlage und außenliegender Nebenstelle zu verlegen sind oder entsprechende Verbindungsleitungen von einem anderen, z.B. öffentlichen, Netzbetreiber anzumieten sind. Die Verbindungskabel bzw. -leitungen sind in Abhängigkeit von den örtlichen Gegebenheiten über entsprechend lange Entfernungen vorzusehen. Bei der Übertragung von Nutzinformationen über größere Entfernungen entstehen übertragungstechnische Probleme wie beispielsweise Dämpfung, so daß entsprechende Maßnahmen zu ergreifen sind, um die auftretenden Probleme zu eliminieren bzw. in einem tolerierbaren Rahmen zu halten. Ein weiteres grundsätzliches Problem besteht darin, daß die Verbindungsleitungen nicht in jedem Fall auf dem theoretisch kürzesten Weg verlegt werden können. Beispielsweise lassen sich außenliegende Nebenstellen nicht direkt mit der Nebenstellenanlage verbinden, wenn zwischen außenliegender Nebenstelle und Nebenstellenanlage eine Straße verläuft oder fremde Grundstücke liegen.

Aus US 5,339,356 ist ein Verfahren entsprechend dem Oberbegriff des Anspruchs 1 bekannt. Zur Herstellung von Fernmeldeverbindungen werden Signalisierungsinformationen, die Rufnummern von Zielteilnehmern umfassen, im Rahmen einer Verbindungsherstellung darauf überprüft, ob zu den Rufnummern anlagenintern Hauptanschlußrufnummern vorliegen. Sofern dies der Fall ist, wird eine Wahl der jeweiligen Hauptanschlußrufnummer veranlaßt.

Ausgehend von diesem Stand der Technik liegt der Erfindung die Aufgabe zugrunde, ein Verfahren der eingangs genannten Art anzugeben, das eine Anbindung außenliegender Nebenstellen auch über eine größere Entfernung erlaubt.

Die Lösung dieser Aufgabe erfolgt erfindungsgemäß durch ein Verfahren mit den Merkmalen des Anspruchs 1.

Hierbei können alle für eine vermittlungstechnische Anbindung außenliegender Nebenstelle an die Nebenstellenanlage erforderlichen Informationen zwischen Nebenstelle und Nebenstellenanlage über ein Fernmeldenetz, insbesondere das öffentliche ISDN, in transparenter Weise ausgetauscht werden. Den außenliegenden Nebenstellen wird nach einer vorteilhaften Ausbildungsform der Erfindung derselbe Umfang von Leistungsmerkmalen wie innenliegenden Nebenstellen der Nebenstellenanlage zur Verfügung gestellt.

Das Verlegen von Verbindungskabeln erübrigt sich; außerdem werden zugleich die übertragungstechnischen Probleme umgangen, die insbesondere bei Verbindungsleitungen größerer Länge auftreten können.

Nachstehend wird die Erfindung unter Bezugnahme auf die Figuren der Zeichnung näher erläutert Es zeigt:
- FIG 1: den Bereich der außenliegenden Nebenstelle, die Nebenstellenanlage und das zwischen beiden befindliche öffentliche Netz, vorzugsweise ein ISDN,
- FIG 2: das vereinfachte Ablaufdiagramm für die Steuerung IC. Abfragen bei ihrer Datenbank DB sind - als interne Managementaufgaben - nicht eigens dargestellt,
- FIG 3: zeigt das vereinfachte Ablaufdiagramm für die Außensteuerung AC.

Eine bevorzugte Ausführungsform der erfindungsgemäßen Anordnung zur Durchführung des Verfahrens ist dadurch gekennzeichnet, daß am Ort der außenliegenden Nebenstelle ein Hauptanschluß des öffentlichen ISDN eingerichtet wird. An diesen Hauptanschluß wird ein Endgerät unmittelbar oder werden mehrere Endgeräte in einer Buskonfiguration angeschlossen. Auch wenn nachfolgend der Einfachheit halber von nur einem Endgerät gesprochen wird ; erlaubt das Verfahren selbstverständlich auch den ISDN-Busbetrieb am Basis-Anschluß. Dem Endgerät wird eine spezielle Schalteinrichtung zugeordnet, die nachfolgend mit Außensteuerung AC bezeichnet wird. Diese kommuniziert mit einer entsprechenden, zentral in der Nebenstellenanlage angeordneten, Funktionseinrichtung, die nachfolgend mit Innensteuerung IC bezeichnet wird. Ein Verwaltungsprogramm sorgt dafür, daß die beiden Schalteinrichtungen eine transparente Privatnetzsignalisierungsverbindung zwischen Endgerät und Nebenstellenanlage herstellen. In Ruhestellung der Außensteuerung AC kann das Endgerät direkt mit dem öffentlichen Netz kommunizieren. Die außenliegende Nebenstelle hat damit wechselweise auch die Funktion eines Hauptanschlusses.

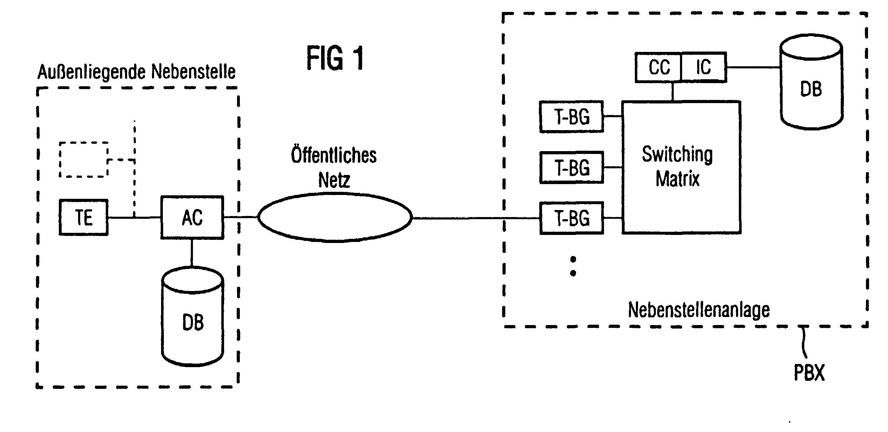

FIG 1 zeigt den Bereich der außenliegenden Nebenstelle, die Nebenstellenanlage und das zwischen beiden befindliche öffentliche Netz, vorzugsweise ein ISDN.

In der in FIG 1 dargestellten außenliegenden Nebenstelle befinden sich ein bzw. mehrere, in unterbrochenen Linien dargestellte Endgeräte TE, denen einzeln oder gemeinsam die Außensteuerung AC zugeordnet ist. Zu dieser gehört eine Datenbank DB. Für die Erfindung ist es hierbei unwesentlich, ob die Außensteuerung AC und/oder DB jeweils in das Endgerät TE integriert sind, oder ob sie physikalisch getrennte Einrichtungen sind.

Die Außensteuerung oder eine Datenbank können allen Endgeräten TE des Busses gemeinsam zugeordnet sein, oder jedem Endgerät TE kann individuell eine eigene Außensteuerung und/oder Datenbank zugeordnet sein. FIG 1 stellt die Variante dar, die aus einer gemeinsamen Außensteuerung mit einer gemeinsamen Datenbank besteht.

In der Nebenstellenanlage sind mehrere Trunk-Baugruppen T-BG, die eigentliche Koppeleinrichtung "Switching-Matrix" und die zur Steuerung der Switching-Matrix sowie der für die von der Nebenstellenanlage gebotenen Dienstmerkmale erforderliche, ebenfalls dargestellte Call Control-Funktionsgruppe CC. Die soweit genannten Funktionsgruppen entsprechen der serienmäßigen Ausstattung der Nebenstellenanlage und sind hier nur zum Verständnis des Gesamtzusammenhangs dargestellt.

Erfindungsgemäß zusätzlich benötigte Funktionsgruppen sind die Innensteuerung IC mit zugehöriger Datenbank DB.

Nachstehend werden die Funktionsgruppen sowie die verwendeten Begriffe näher erläutert:

Die Begriffe "Kommende Verbindung" und "Gehende Verbindung" werden im allgemeinen und im Rahmen dieser Beschreibung folgendermaßen verwendet: Verbindungsrichtungen sind auf das Endgerät TE bzw. dessen Benutzer bezogen. Eine gehende Verbindung wird vom Benutzer initiiert, während eine kommende von der jeweiligen Vermittlungseinrichtung, wie z.B. der Nebenstellenanlage aufgebaut wird.

Unter dem Nebenanschluß-Kriterium versteht man ein Kriterium, das - je nach Verkehrsrichtung - zwischen Außen- und Innensteuerung bzw. umgekehrt übertragen wird. Es dient zur Anzeige, daß es sich bei der aufzubauenden Verbindung um eine solche von bzw. zu einer außenliegenden Nebenstelle handelt.

Als Nebenanschluß-Kriterium können u. a., einzeln oder in sinnvollen Kombinationen, verwendet werden:
- Eine besondere Rufnummer des öffentlichen Netzes, bei der es sich ggf. um eine Geheimrufnummer handeln kann. Hierbei muß evtl. für das Endgerät TE das Leistungsmerkmal "Mehrfach-Rufnummer" eingerichtet werden, damit die normale Hauptanschluß-Rufnummer und die besondere Rufnummer parallel verwendet werden können. Nebenstellenanlagenseitig kann die Individualität der besonderen Rufnummer entweder gleichfalls durch das Leistungsmerkmal "Mehrfach-Rufnummer" oder durch das Leistungsmerkmal Durchwahl in Zusammenhang mit einer, ggf geheimen Nebenstellenrufnummer erreicht werden.
- Eine Subadresse, sofern das öffentliche Netz deren Transport unterstützt.
- Der Index einer "Geschlossenen Benutzergruppe", sofern das öffentliche Netz dieses Leistungsmerkmal unterstützt.
- Ein besonderes Protokoll innerhalb der aufgebauten Nutzverbindung zwischen Innen- und Außensteuerung, z.B. innerhalb der Zusatzdienste "User-User-Signalling No. 1" oder "User-User-Signalling No. 3", sofern das öffentliche Netz diese Leistungsmerkmale unterstützt.

Die Wahl des Nebenanschluß-Kriteriums hängt von den jeweiligen Gegebenheiten im öffentlichen Netz ab.

Die Außensteuerung AC legt in Ruhestellung den Betrieb des außenliegenden Endgeräts TE als Hauptanschluß fest. In diesem Zustand läßt sie gehende und kommende Verbindungen vom bzw. zum Endgerät TE ins öffentliche ISDN zu. Das Endgerät TE verhält sich protokollgerecht, wie für den Hauptanschluß im einzelnen in den Anschlußbedingungen für das jeweilige öffentliche Netz festgelegt. Soweit vom Endgerät TE funktionell unterstützt, können die ihm zugewiesenen Leistungsmerkmale des öffentlichen Netzes durch seinen Benutzer gesteuert werden bzw. kann das Endgerät TE umgekehrt an den Leistungsmerkmalen teilnehmen, die seitens des öffentlichen Netzes oder des anderen Teilnehmers einer Verbindung aufgerufen werden.

Wird die Außensteuerung aktiviert, verhält sich das Endgerät TE wie ein innenliegendes Endgerät seiner Nebenstellenanlage. Dazu gehören u.a.:
- das Endgerät TE verhält sich protokollgerecht, wie für Nebenanschlüsse im einzelnen in den Anschlußbedingungen für die jeweilige Nebenstellenanlage festgelegt;
- soweit vom Endgerät TE funktionell unterstützt, können die ihm zugewiesenen Leistungsmerkmale der Nebenstellenanlage durch seinen Benutzer gesteuert werden bzw. kann das Endgerät TE umgekehrt an den Leistungsmerkmalen teilnehmen, die seitens der Nebenstellenanlage (oder des anderen Teilnehmers einer Verbindung) aufgerufen werden.

Die Außensteuerung kann für gehende Verbindungen vom Benutzer aktiviert werden, und zwar entweder explizit durch Eingabe eines entsprechenden Aufrufs, wie z.B. durch Betätigung einer besonderen Taste, oder automatisch bei jeder gehenden Belegung. Im letztgenannten Fall muß der Benutzer explizit angeben, falls er die Außensteuerung nicht aktivieren, d.h. sein Endgerät als Hauptanschluß benutzen möchte.

Für kommende Verbindungen kann die Außensteuerung aktiviert werden durch das der eintreffenden Verbindung von der Innensteuerung her mitgegebene Nebenanschluß-Kriterium.

Die Innensteuerung ist der Systemsteuerung (Call Control-Funktionsgruppe) CC der Nebenstellenanlage zugeordnet und hat im Ruhezustand eine Monitor-Funktion. Diese überprüft zum einen alle Amts-, Intern- und ggf. Querverbindungen daraufhin, ob deren Zielrufnummern denen einer außenliegenden Nebenstelle entsprechen. Ist dieses der Fall, so behandelt sie diese Verbindung als - im Sinne dieses Patentanspruchs - kommende Verbindung dieser außenliegenden Nebenstelle.

Anderseits überprüft die Innensteuerung bei allen vom öffentlichen Netz her eintreffenden Verbindungen, ob das Nebenanschluß-Kriterium vorliegt. Ist dieses der Fall, so behandelt sie diese Verbindung als - im oben erwähnten Sinne - gehende Verbindung der außenliegenden Nebenstelle.

Die beiden vorerwähnten Bedingungen schließen einander hierbei nicht aus. Für den Verkehr von einer außenliegenden Nebenstelle zu einer anderen können sowohl das Nebenanschluß-Kriterium als auch Zielrufnummernidentität mit einer außenliegenden Nebenstelle auftreten.

Ist das Ergebnis einer der beiden genannten Prüfungen positiv, aktiviert die Innensteuerung weitere Funktionen, abhängig von der Verbindungsrichtung der außenliegenden Nebenstelle.

Die Datenbanken bei der außenliegenden Nebenstelle und in der Nebenstellenanlage haben im Prinzip dieselben Funktionen, nämlich die Art des jeweils benutzten Nebenanschluß-Kriteriums, die Identität des jeweils anderen Partners, die Art des, bzw. der transparenten Pfade zur Übertragung des Nebenanschluß-Kriteriums und der Privatnetzsignalisierung Nebenanschluß-Kriteriums, sowie die Rufnummern des öffentlichen Netzes zu speichern, mit Hilfe derer der jeweils andere Partner erreichbar ist.

Die Datenbanken dürften jedoch in der Regel unterschiedliche Größen haben. Während bei der außenliegenden Nebenstelle nur die Parameter für eine Verbindung zur zugehörigen Nebenstellenanlage PBX gespeichert werden müssen, müssen in der Nebenstellenanlage PBX nämlich die entsprechenden Parameter für alle ihre außenliegenden Nebenstellen gespeichert werden.

Nachstehend wird ein erfindungsgemäßes Verfahren zum Verbindungsaufbau nach einer kurzen Begriffserläuterung näher beschrieben:

Im Ruhezustand existiert zwischen Endgerät TE und Nebenstellenanlage PBX weder eine physikalische noch eine logische Verbindung. Es fallen somit auch keine Verbindungs- oder Bereitstellungsgebühren an, die an den Betreiber des öffentlichen Netzes zu entrichten wären, abgesehen von den für das Endgerät TE in seiner Eigenschaft als Hauptanschluß zu entrichtenden Gebühren. Es existieren also nur korrespondierende Einträge in den beiden Datenbanken als vorbereitende Maßnahme für eine Nutzung als außenliegende Nebenstelle.

Soll das Endgerät TE tatsächlich als eine solche genutzt werden, ist zunächst eine Verbindung zwischen diesem und seiner zugehörigen Nebenstellenanlage PBX herzustellen.

Der Anreiz zur Herstellung einer solchen Verbindung wird vom Anreiz des Gesprächswunsches bei kommender Verbindung von der Nebenstellenanlage PBX bzw. bei gehender Verbindung vom Endgerät TE abgeleitet. Das Verhalten der beiden Steuerungen bei beiden Verbindungsaufbaurichtungen wird nachstehend in diesem Kapitel beschrieben.

Dabei wird - ISDN-Prinzipien folgend - sowohl eine Signalisierungsverbindung als auch eine Nutzkanalverbindung, z.B. in Form eines ISDN-B-Kanals hergestellt. Nachdem letzterer auf dem Streckenabschnitt >außenliegende Nebenstelle - Nebenstellenanlage PBX< (bzw. umgekehrt) aufgebaut wurde, wird er anschließend in den weiteren Verbindungsaufbau zwischen dem Endgerät TE der außenliegenden Nebenstelle und dem fernen Endgerät am anderen Ende der Gesamtverbindung (bzw. umgekehrt) mit einbezogen.

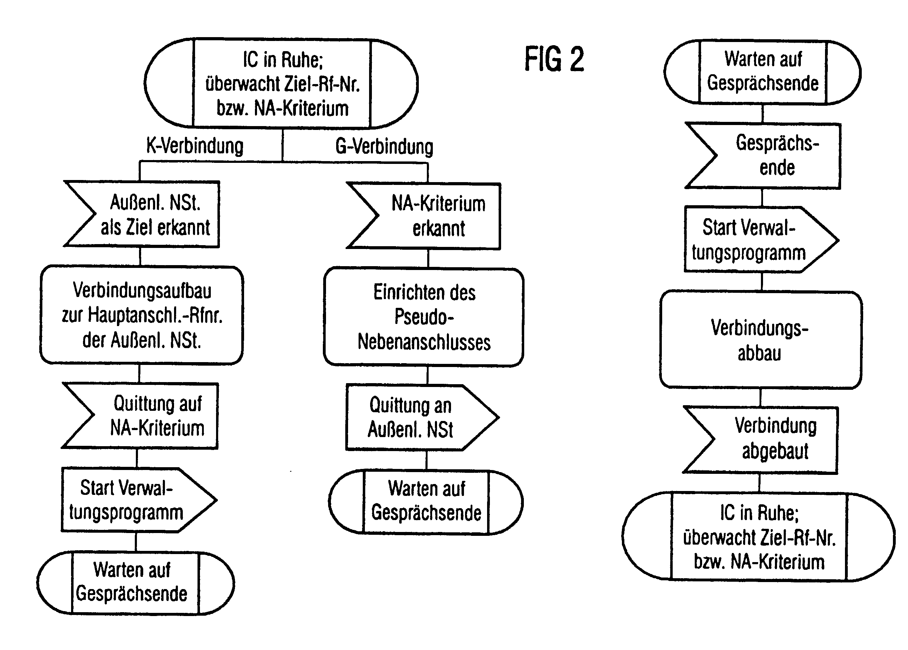

Nachstehend wird für eine kommende Verbindung der Ablauf in der Nebenstellenanlage PBX erläutert (siehe FIG 2, linker und rechter Zweig):

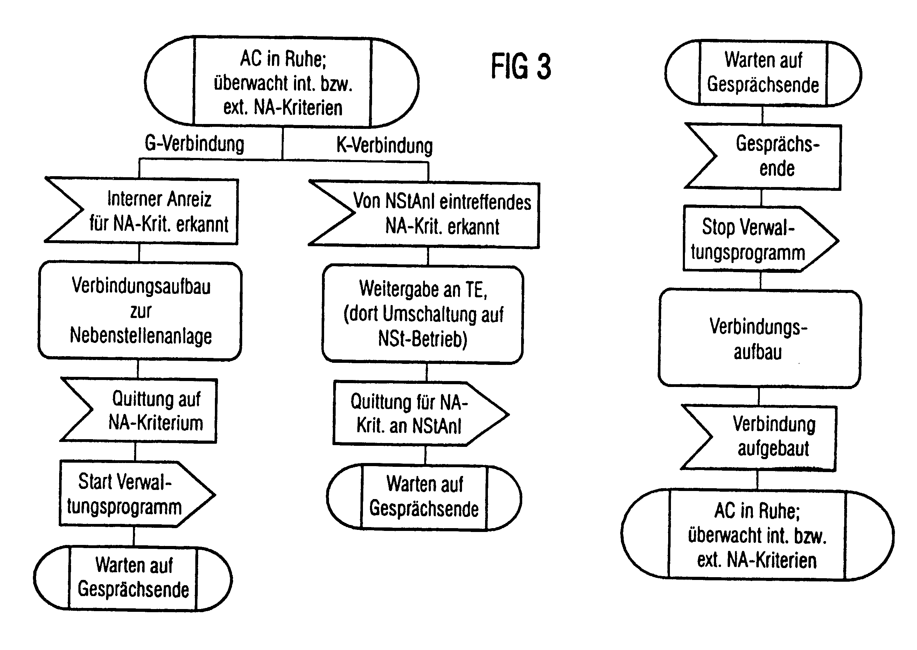

Wurde die Anforderung nach Aufbau einer kommenden Verbindung zur außenliegenden Nebenstelle durch die Innensteuerung IC erkannt, so fragt diese ihre Datenbank DB nach den Parametern für das Erreichen der außenliegenden Nebenstelle ab. Diese können, z.B., die Wahl einer Hauptanschlußrufnummer beinhalten. Letzteres muß aber nicht notwendigerweise der Fall sein, es könnten stattdessen auch Kurzwahleinrichtungen oder ein Hotline-(Sofortverbindungs-)Leistungsmerkmal des öffentlichen Netzes zur Benutzung angegeben sein. Im folgenden sei jedoch angenommen, daß die Wahl einer Hauptanschlußrufnummer des öffentlichen Netzes angegeben ist. Die Abfragen bei der Datenbank sind, da es sich hierbei um interne Verwaltungsaufgaben handelt, in der Figur 2 nicht dargestellt. Dasselbe gilt für Abfragen bei der Datenbank durch die Außensteuerung in Bezug auf Figur 3.

Die Innensteuerung IC veranlaßt über die Call-Control-Funktionsgruppe den Verbindungsaufbau durch das öffentliche Netz mittels Wahl der entsprechenden Hauptanschlußrufnummer und unter Benutzung der für das öffentliche Netz vorgesehenen Signalisierungsprotokolle. Die Hauptanschlußrufnummer selbst kann bereits, wenn sie eine Rufnummer ist, die zusätzlich zu der Rufnummer eingerichtet wurde, die zum Hauptanschlußbetrieb des außenliegenden Endgeräts TE benutzt wird, das Nebenanschluß-Kriterium bilden, mit dem die Außensteuerung AC aktiviert wird. Andernfalls wird das Nebenanschluß-Kriterium zusätzlich übertragen.

Nachdem das Nebenanschluß-Kriterium von der Außensteuerung AC quittiert ist, wird das Verwaltungsprogramm gestartet.

Nachstehend wird für eine kommende Verbindung der Ablauf bei der außenliegenden Nebenstelle erläutert (siehe FIG 3, mittlerer und rechter Zweig):

Sobald die Außensteuerung AC das Nebenanschluß-Kriterium, beispielsweise eine eintreffende Belegung unter der besonderen Rufnummer oder ein explizit angegebenes Kriterium, erkennt, gibt sie dieses Kriterium, eventuell in geänderter Form, an das bzw. die zugehörige(n) Endgerät(e) weiter, damit diese(s) sich entsprechend den jeweiligen Anschlußbedingungen verhalten kann(können). Dazu gehört auch, daß es seinem Benutzer das Vorliegen des Nebenanschluß-Kriteriums in geeigneter Form anzeigt.

Ferner quittiert die Außensteuerung der Nebenstellenanlage, daß sie das Endgerät TE über das Vorliegen einer Nebenanschlußverbindung informiert hat. Diese Quittung wird von der Innensteuerung zum Starten des Verwaltungsprogramms benutzt.

Nachstehend wird für eine gehende Verbindung der Ablauf bei der außenliegenden Nebenstelle erläutert (siehe FIG 3, linker und rechter Zweig):

Im Ruhezustand läßt die Außensteuerung AC etwaige Verbindungsanforderungen des Endgerätes TE in Richtung öffentliches Netz ohne Einflußnahme passieren. Erkennt sie jedoch das vom Benutzer explizit oder implizit eingegebene Nebenanschluß-Kriterium, wird sie aktiv und fragt bei ihrer Datenbank DB ab, wie die zugehörige Nebenstellenanlage PBX erreichbar ist. Hierzu gehört die Ermittlung der Form des weiterzureichenden Nebenanschluß-Kriteriums sowie der Angabe der Rufnummer der Nebenstellenanlage. Sinngemäß gilt hierbei für den gehenden Verbindungsaufbau das gleiche wie weiter oben für den kommenden Verbindungsaufbau seitens der Nebenstellenanlage PBX gesagt ist.

Sobald die Außensteuerung die Bestätigung über den Empfang des Nebenanschluß-Kriteriums von der Nebenstellenanlage PBX erhalten hat, startet sie das Verwaltungsprogramm.

Nachstehend wird für eine gehende Verbindung der Ablauf in der Nebenstellenanlage PBX erläutert (siehe FIG 2, mittlerer und rechter Zweig):

Bei einer gehenden Verbindung weist die Innensteuerung IC dem Anschlußorgan, über welches die betreffende Amtsverbindung eingetroffen ist, einen (realen oder virtuellen) "Pseudo-Nebenanschluß" zu, mit der Identität der für die außenliegenden Nebenstelle vorgesehenen internen Rufnummer und den dafür vorgesehenen Leistungsmerkmalen. Die Nebenstellenanlage PBX betrachtet nunmehr die eingetroffenen Amtsverbindung als eine durch den Pseudo-Nebenanschluß initiierte, gehende Verbindung. Zwischen Innen- und Außensteuerung läuft das Verwaltungsprogramm ab.

Nachstehend wird das Verwaltungsprogramm näher erläutert:

Aufgabe des Verwaltungsprogramms ist es, durch das öffentliche Netz einen Pfad zu erstellen, aufrecht zu erhalten und wieder auszulösen, über den die Privatnetzsignalisierung zwischen Nebenstellenanlage PBX und Endgerät TE im Nebenanschluß-Betriebsmodus transparent abgewickelt werden kann.

Dazu sind in den Datenbanken bei der Innen- wie auch bei der Außensteuerung Angaben über die Art des Signalisierungspfades enthalten, vorzugsweise über den Zusatzdienst "User-User-Signalling No. 3" des öffentlichen ISDN oder auch über einen weiteren Übertragungsdienst auf einem zweiten B-Kanal.

Im folgenden sei angenommen, daß der Zusatzdienst "User-User-Signalling No. 3" des öffentlichen Netzes benutzt wird.

Sobald die initiierende Seite (Außensteuerung AC bei einer gehenden bzw. Innensteuerung IC bei einer kommenden Verbindung) die Quittung für das Nebenanschluß-Kriterium erhalten hat, wertet sie dieses als Zeichen, den transparenten Signalisierungspfad aufzubauen.

Im angenommenen Fall "User-User-Signalling No. 3" bedeutet dieses, diesen Zusatzdienst aufzurufen. Dazu bedient sich die initiierende Seite eines im Protokoll gemäß den Anschlußbedingungen des öffentlichen Netzes festgelegten Verfahrens, das nicht Gegenstand dieses Patentanspruchs ist.

Über den aufgebauten, transparenten Pfad wird anschließend die Privatnetzsignalisierung übertragen, die über die verschiedenen vermittlungstechnischen Zustände bis zum eigentlichen "Gespräch", und anschließend wieder zu dessen Auslösung führt.

Als "Gespräch" im Sinne dieses Patentanspruchs gelten alle Arten von Nutzdatenübertragung zwischen den Benutzern der Verbindung, unabhängig davon, ob es sich wirklich um ein Telefon-Gespräch oder um, z.B., eine Datenübertragung o.ä. handelt. Neben dem Aufruf des transparenten Pfades für das Privatnetzsignalisierungsprotokoll (z.B. CorNet-T) obliegt dem Verwaltungsprogramm die Aufgabe, die Konvergenzfunktionen zur Verfügung zu stellen, die für die Einbettung dieses Signalisierungsprotokolls in den Pfad entsprechend dessen Übertragungseigenschaften ("bearer capability") notwendig sind. Hierzu gehören Segmentierungs- und Assemblierfunktionen, Sicherungsfunktionen einer OSI-Schicht 2 u. a. m., das nicht Gegenstand dieses Patentanspruchs ist.

Die Konvergenzfunktionen bleiben während der gesamten Verbindungsdauer aktiv, d.h. sie stehen jederzeit zur Unterstützung der Privatnetzsignalisierung zur Verfügung.

Wird die Privatnetzsignalisierung beendet (weil das Gespräch beendet wird), so wird als erstes das Verwaltungsprogramm beendet, d.h. es wird der Pfad für die Privatnetzsignalisierung als erstes abgebaut, danach erst der B-Kanal zusammen mit der Signalisierungsbeziehung durch das öffentliche ISDN.

## Patentansprüche

1. Verfahren zur Herstellung von Fernmeldeverbindungen zwischen außenliegenden Nebenstellen und einer Fernmeldenebenstellenanlage (PBX) mit einer Steuerung (CC), der ein in der Weise ausgestaltetes Programm zugeordnet ist, daß im Rahmen einer Verbindungsherstellung Signalisierungsinformationen, die eine die Rufnummer des Zielteilnehmerendgeräts bezeichnende Information umfassen, darauf überprüft werden, ob zu diesen Rufnummerninformationen anlagenintern jeweils eine zu einer Nebenstelle zugeordnete Hauptanschlußrufnummerninformation vorliegt, und daß die Steuerung (CC), sofern zu der Rufnummer des Zielteilnehmerendgeräts anlagenintern eine Hauptanschlußrufnummerninformation vorgesehen ist, die Wahl dieser Hauptanschlußrufnummer veranlaßt,
**dadurch gekennzeichnet,**
**daß** das der Steuerung (CC) zugeordnete Programm in der Weise ausgestaltet ist, daß im Rahmen einer Verbindungsherstellung Signalisierungsinformationen, die eine die Rufnummer des Ursprungsteilnehmerendgeräts bezeichnende Information umfassen, darauf überprüft werden, ob zu diesen Rufnummerninformationen anlagenintern jeweils eine Hauptanschlußrufnummerninformation vorliegt, und daß die Steuerung (CC), sofern einerseits zu der Rufnummer des Ursprungsteilnehmerendgeräts anlagenintern eine Hauptanschlußrufnummerninformation vorgesehen ist und sofern andererseits zu der Rufnummer des Zielteilnehmerendgeräts anlagenintern ebenfalls eine Hauptanschlußrufnummerninformation vorgesehen ist oder das Zielteilnehmerendgerät ein internes Teilnehmerendgerät der Fernmeldenebenstellenanlage (PBX) ist, nach Herstellung der Fernmeldeverbindung ein anlagenspezifisches Protokoll aktiviert und die Übertragung der Nutzinformationen im Rahmen dieses Protokolls freigibt, indem durch ein Verwaltungsprogramm anhand in einer Datenbank (DB) einer Innensteuerung (IC) der Fernmeldenebenstellenanlage (PBX) und/oder in einer Datenbank (DB) einer Außensteuerung (AC) eines Endgeräts (TE) und/oder eines Basisanschlusses enthaltener Angaben über eine Art eines Signalisierungspfades veranlaßt wird, daß die Innensteuerung und die Außensteuerung eine transparente Privatnetzsignalisierung zwischen der Nebenstellenanlage und dem Endgerät und/oder Basisanschluß herstellen, wobei die Außensteuerung eine spezielle dem Endgerät und/oder dem Basisanschluß zugeordnete Schalteinrichtung ist, und wobei die Innensteuerung eine in der Nebenstellenanlage angeordnete Funktionseinrichtung ist, die mit der Außensteuerung kommuniziert.

## Claims

1. A method for establishing telephone connections between off-premises extensions and a private branch exchange (PBX), having a controller (CC) that is assigned a program configured in the way that as part of a process of establishing a connection, signalling information, which includes an item of information describing the dial number of the destination subscriber terminal equipment, is checked as to whether an item of main-station dial-number information assigned to an extension exists in the exchange for this dial-number information, and that the controller (CC) initiates the dialling of this main-station dial number provided that an item of main-station dial-number information is present in the exchange for the dial number of the destination subscriber terminal equipment, **characterised in that**
the program assigned to the controller (CC) is configured in the way that as part of a process of establishing a connection, signalling information, which includes an item of information describing the dial number of the originating subscriber terminal equipment, is checked as to whether an item of main-station dial-number information exists in the exchange for this dial-number information, and that the controller (CC), provided that firstly an item of main-station dial-number information is present in the exchange for the dial number of the originating subscriber terminal equipment, and secondly an item of main-station dial-number information is also present in the exchange for the dial number of the destination subscriber terminal equipment or the destination subscriber terminal equipment is an internal subscriber terminal equipment of the telephone private branch exchange (PBX), activates, after establishing the telephone connection, an exchange-specific protocol and enables the transmission of the user information within the framework of this protocol, **in that** a management program, using information on a type of a signalling path contained in a database (DB) of an internal controller (IC) of the telephone private branch exchange (PBX) and/or in a database (DB) of an external controller (AC) of a terminal equipment (TE) and/or of a basic access line, causes the internal controller and the external controller to establish a transparent private network signalling between private branch exchange and the terminal equipment and/or basic access line, the external controller being a special switching device assigned to the terminal equipment and/or the basic access line, and the internal controller being a functional device arranged in the private branch exchange that communicates with the external controller.

## Revendications

1. Procédé pour l'établissement de liaisons de télécommunication entre des postes supplémentaires externes et un central privé de télécommunication (PBX) avec une commande (CC), à laquelle est attribuée un programme conçu de telle sorte que, dans le cadre d'un établissement de liaison, des informations de signalisation, qui comprennent une information désignant le numéro d'appel du terminal d'abonné de destination, sont contrôlées pour savoir si l'on a en ce qui concerne ces informations sur le numéro d'appel, de façon interne à l'installation, à chaque fois une information sur le numéro d'appel du poste principal qui est attribué à un poste secondaire, et en ce que la commande (CC) demande la sélection de ce numéro d'appel de poste principal, dans la mesure où une information sur le numéro d'appel du poste principal est prévue de façon interne à l'installation en ce qui concerne le numéro d'appel du terminal d'abonné de destination,
**caractérisé en ce que**
le programme attribué à la commande (CC) est conçu de telle sorte que, dans le cadre d'un établissement de liaison, des informations de signalisation, qui comprennent une information désignant le numéro d'appel du terminal d'abonné d'origine, sont contrôlées pour savoir si l'on a de façon interne à l'installation et à chaque fois une information sur le numéro d'appel du poste principal à propos de ces informations sur le numéro d'appel, et de telle sorte que la commande (CC), dans la mesure où d'une part une information sur le numéro d'appel du poste principal est prévue de façon interne à l'installation pour le numéro d'appel du terminal d'abonné d'origine et dans la mesure où d'autre part également une information sur le numéro d'appel du poste principal est prévue de façon interne à l'installation pour le numéro d'appel du terminal d'abonné de destination ou dans la mesure où le terminal d'abonné de destination est un terminal d'abonné interne du central privé de télécommunication (PBX), active un protocole spécifique à l'installation après l'établissement de la liaison de télécommunication et libère la transmission des informations utiles dans le cadre de ce protocole par le fait que, par un programme de gestion à l'aide d'indications contenues dans une banque de données (DB) d'une commande interne (IC) du central privé de télécommunication (PBX) et/ou dans une banque de données (DB) d'une commande externe (AC) d'un terminal (TE) et/ou d'un raccordement de base, relatives à un type d'un chemin de signalisation, et que la commande interne et la commande externe établissent une signalisation transparente de réseau privé entre le central privé et le terminal et/ou le raccordement de base, la commande externe étant un dispositif de commutation spécial attribué au terminal et/ou au raccord de base, et la commande interne étant un dispositif de fonction disposé dans le central privé qui communique avec la commande externe.
